# EUROPEAN PATENT APPLICATION

(11) **EP 1 191 357 A2**
(43) Date of publication of application: **27.03.2002**
(21) Application number: 01306897.8
(22) Date of filing: 14.08.2001
(51) Int. Cl.: G02B 1/11

(54) **Light absorption/anti-reflection material member and display apparatus**

(30) Priority: 14.08.2000 JP 2000245823; 17.08.2000 JP 2000247433
(71) Applicant: SONY CORPORATION, Tokyo (JP)
(72) Inventor: Sumida, Takao, Ohya-cho, Inazawa-shi, Aichi-ken (JP); Funahashi, Hiroko, Ohya-cho, Inazawa-shi, Aichi-ken (JP); Araki, Soya, Ohya-cho, Inazawa-shi, Aichi-ken (JP)
(74) Representative: Ayers, Martyn Lewis Stanley

(57) **Abstract**

A light absorption/anti-reflection material member of the present invention comprises a light absorption film that is formed on a base member and contains pigment fine particles and high-refractive-index fine particles and an anti-reflection multi-layer film that is formed on the light absorption film as having a multi-layer structure and at least one layer of that consists of an electrically conductive thin film so as to attenuate, due to optical interference, a reflected light outgoing following the impingement of a relevant incident light. Also, a display apparatus is constructed wherein the light absorption/anti-reflection material member is formed as an anti-reflection film on the outer surface of the panel thereof.

As a result of this, it is possible to provide a light absorption/anti-reflection material member that can realize a high contrast and an electrically conductive anti-reflection film, as well as a display apparatus, through the execution of an inexpensive manufacturing process.

## Description

The present invention relates to a light absorption/anti-reflection material member suitable for strengthening and sharpening the contrast of a cathode ray tube that uses especially a flat panel glass, and a display apparatus that uses this.

In recent years, the configuration of a face panel externally equipped surface of a display apparatus such as a cathode ray tube has gone on being flattened. In a cathode ray tube, when the configuration of the outer surface of the face panel thereof is flattened, the difference in thickness between a central portion and corner portions of the panel glass increases for the purpose of its resisting the outside air pressure.

By the way, the contrast of the cathode ray tube was conventionally determined according to the light absorption of the panel glass and the decrease effect of the reflectance of the fluorescent surface.

However, when the difference in terms of transmittance occurs correspondingly to the difference in the thickness of the panel glass as the outer surface of the face panel flattens, this is followed by the degradation of the luminance in terms of its uniformity. As a result of this, it becomes difficult to obtain an optimum contrast at each of the central portion and corner portions of the panel.

Accordingly, it is arranged to increase the transmittance of the glass and impart light absorption property to the anti-reflection material member formed on the surface of the panel glass. It is thereby arranged to make the total transmittance equivalent and to obtain a good level of contrast.

As this kind of light absorption/anti-reflection material member or body, there is conventionally known the following. First, a light absorption/anti-reflection material member that has a two-layer structure and that has the functions of reflection prevention, light absorption, and electrical conductivity (see Japanese Patent Application Laid-Open Publication No. Hei-9-156964). Second, an electrically conductive/light attenuation type anti-reflection film member that has a structure of glass/SnO₂ (tin oxide)/TiN (titanium nitride)/SnO₂/TiN/SiO₂ (silicon nitride) (see Japanese Patent Application Laid-Open Publication No. Hei-6-510382), and so on.

In the light absorption/anti-reflection material member that is disclosed in Japanese Patent Application Laid-Open Publication No. Hei-9-156964, the following measures are taken. Namely, the transmittance of the panel glass is increased from 50% to 80%, while the transmittance of the film is decreased from 80% down to 50%. By taking these measures, it is indeed possible to obtain an equivalent contrast.

However, in order to obtain an equivalent contrast, the thickness of the light absorption film must be made greater. In case the difference in the index of refraction between the panel glass and the film is great, the following phenomenon occurs. Namely, a light incident from the glass side (in the case of a cathode ray tube the luminescence made from the fluorescent surface) is reflected at the interface between the glass and the light absorption film. This reflected light again impinges upon the fluorescent material and causes luminescence of it. For this reason, the inconvenience that the image on the cathode ray tube is doubly seen has hitherto occurred.

On the other hand, in the electrically conductive/ light attenuation type anti-reflection film disclosed in Japanese Patent Application Laid-Open Publication No. Hei-6-510382, the following is indeed possible. Namely, it is arranged to optimize the refractive index and thickness of the first layer transparent film as counted from the glass side. By doing this optimization, it is possible to attenuate the amount of a light entering from the glass side. However, there is the demerit due to an increase in the construction of the film.

Also, obtaining as the light-absorption thin film material an optimum one by taking the wavelength dispersion of the optical constant into consideration is very difficult. For example, that film is unsuitable for material designing based on the consideration of, for example, the emission spectrum ratio between each two of the R (red), G (green), and B (blue) of the cathode ray tube.

A light absorption/anti-reflection material member of the present invention comprises a light absorption film that is formed on a base member and that contains therein pigment fine particles and high-refractive-index fine particles; and an anti-reflection multi-layer film that is formed on the light absorption film as a multi-layer structure and at least one layer of that has an electrically conductive thin film to thereby attenuate a reflected light corresponding to an incident light through the action of optical interference.

According to the construction of the above-described light absorption/anti-reflection material member of the present invention, the light absorption film contains pigment fine particles as well as high-refractive-index fine particles. As a result of this, it becomes possible to adjust the transmittance and index of refraction of the light absorption film.

Also, the anti-reflection multi-layer film can attenuate a reflected light corresponding to an incident light through the action of optical interference. Simultaneously, by at least one layer of it consisting of an electrically conductive thin film, it is possible to prevent the unneeded radiation from being leaked.

A light absorption/anti-reflection material member of the present invention comprises a light absorption film of a two-layer structure one of that is a first layer containing therein only high-refractive-index fine particles and silicon oxide alone and having a thickness of 5 nm or more and the other of that is a second layer consists of pigment fine particles, high-refractive-index fine particles, and silicon oxide; and an anti-reflection multi-layer film that is formed on the light absorption film as a multi-layer structure and at least one layer of that consists of an electrically conductive film to thereby attenuate a reflected light corresponding to an incident light through the action of optical interference.

In the above-constructed light absorption/antireflection material member, the losses of the reflections at the interfaces between the light absorption film and the substrate become almost ignorable. This is because the refractive indexes of those two elements become substantially the same through the adjustment of the contact of the high-refractive-index fine particles. Accordingly, when forming the light absorption/antireflection material member, it becomes possible to perform individual, independent control of each of the transmittance, the reflectance, etc.

A display apparatus of the present invention has the anti-reflection film formed on the outer surface of its panel, which anti-reflection film is comprised of a light absorption film formed on a base member and containing therein pigment fine particles and high-refractive-index fine particles; and an anti-reflection multi-layer film that is formed on the light absorption film as a multi-layer structure and at least one layer of that consists of an electrically conductive film to thereby attenuate a reflected light corresponding to an incident light through the action of optical interference.

According to the construction of the above-described display apparatus of the present invention, on the outer surface of the panel, there is provided an anti-reflection film having a similar construction to the above-described light absorption/anti-reflection material member. As a result of this, it is possible to construct a selective absorption filter through the use of the light absorption film.

The present invention will be further described hereinafter with reference to the following description of an exemplary embodiment in the accompanying drawings, in which:-
FIG. 1 is a sectional view illustrating a light absorption/anti-reflection material member according to a first embodiment of the present invention;
FIG. 2 is a sectional view illustrating the construction of a light absorption film according to the first embodiment of the present invention;
FIG. 3 is a flow chart illustrating manufacturing steps for manufacturing the light absorption/anti-reflection material member according to the first embodiment of the present invention;
FIG. 4 is a sectional view illustrating the light absorption/anti-reflection material member according to another embodiment of the present invention;
FIG. 5 is a schematic sectional view of a cathode ray tube to which the light absorption/anti-reflection material member according to the present invention is applied;
FIG. 6 is a sectional view illustrating a light absorption/anti-reflection material member according to a second embodiment of the present invention;
FIG. 7 is an explanatory view illustrating an example of the blend of a base coating material at the time when forming a light absorption film of the light absorption/anti-reflection material member;

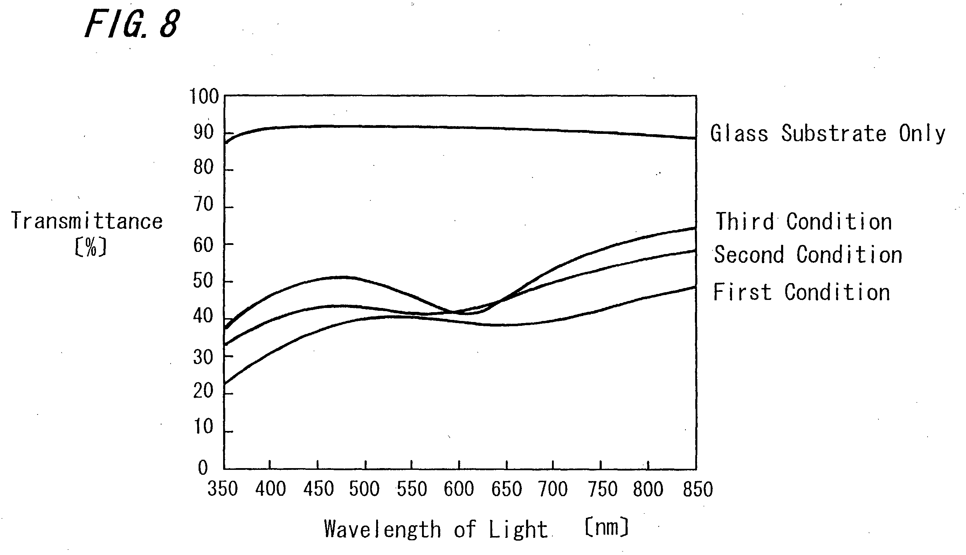

FIG. 8 is an explanatory view illustrating the property of a formed light absorption film, which view is one illustrating a state of distribution of the transmittance thereof with respect to a reverse side incident light; and

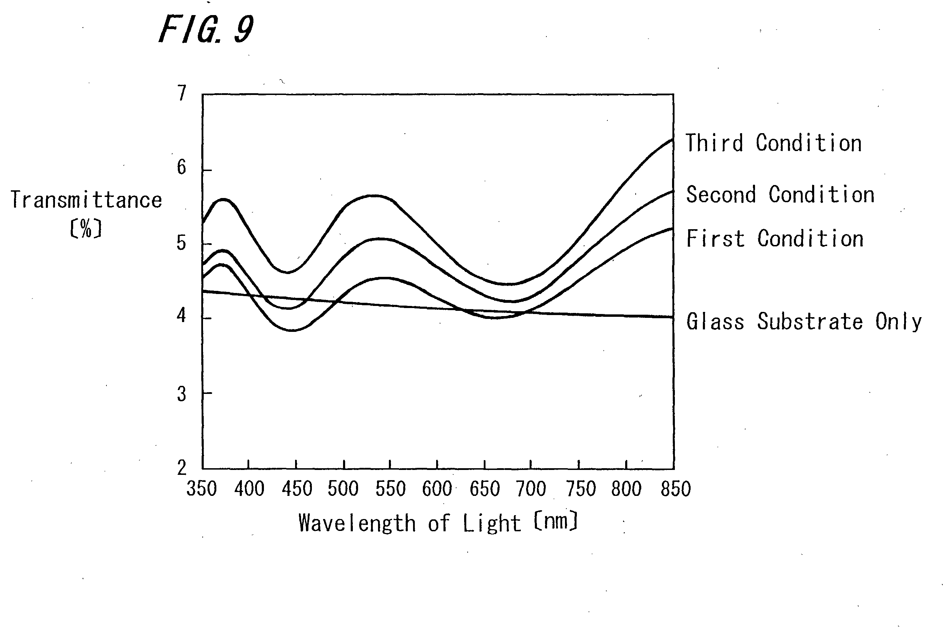

FIG. 9 is an explanatory view illustrating the property of the formed light absorption film, which view is one illustrating a state of distribution of the reflectance thereof with respect to an obverse side incident light.

### [First Embodiment]

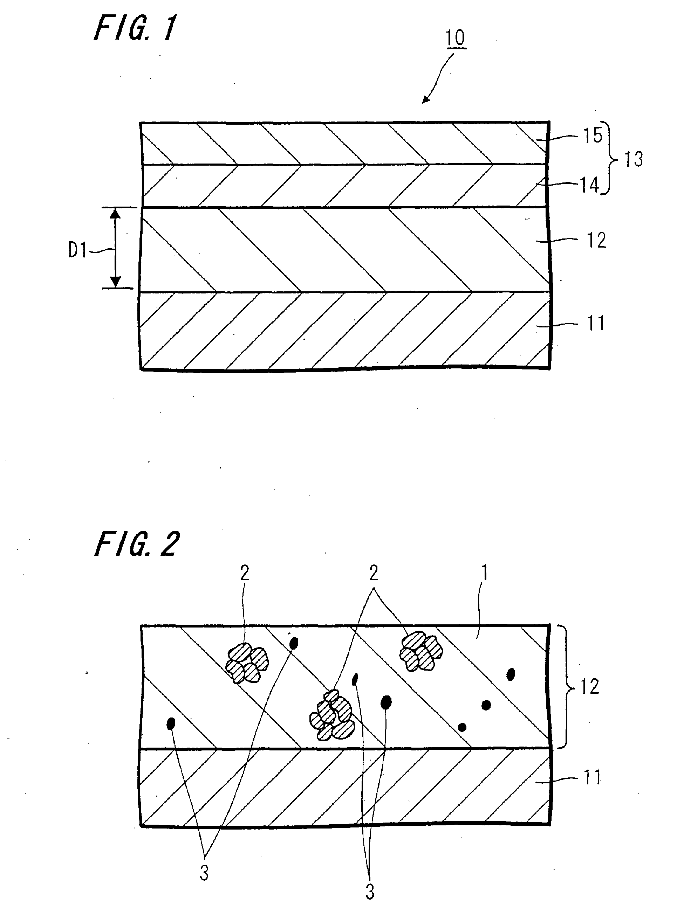

A light absorption/anti-reflection film 10 of a first embodiment as shown in FIG. 1 is constructed to have the following two films. One is a light absorption film 12 that is formed on a glass base member 11 and that contains therein pigment fine particles and that has a physical thickness of from 10 nm inclusive to 1000 nm inclusive or, preferably, from 100 nm inclusive to 800 nm inclusive. The other is an anti-reflection multi-layer film 13 that is formed on the light absorption film 12 to thereby attenuate a reflected light corresponding to an incident light through the action of optical interference.

The structure of the light absorption film 12 of the light absorption/anti-reflection film 10 of FIG. 1 is illustrated in FIG. 2.

This light absorption film 12 contains silicon oxide (SiO₂) as a main component, and is formed of it by fine particles of this silicon oxide becoming a binder 1.

And, the light absorption film 12 contains therein pigment fine particles 2 and high-refractive-index fine particles 3 so that a desired distribution of refractive indexes may be obtained.

As the pigment fine particles 2, there can be used the following. Carbon fine particles (carbon black). Inorganic pigment fine particles prepared from compounds of each of iron, cobalt, manganese, tin, ruthenium, etc. Or organic fine particles consisting of organic substances.

As a result of containing those pigment fine particles 2, it is possible to adjust the transmittance index of the light absorption film 12.

As the high-refractive-index fine particles 3, there can be used fine particles of high-refractive-index material of tin oxide (the refractive index: nearly 2. 0), titanium oxide (the refractive index: nearly 2. 6), etc.

As a result of containing those high-refractive-index fine particles 3, it is possible to adjust the refractive index of the light absorption film 12.

The above-constructed light absorption film 12 is formed through the execution of the following steps. Blending silicon oxide becoming the binder 1, pigment fine particles 2, and high-refractive-index fine particles 3 into an organic solvent such as ethanol. Thereby preparing a silicon alkoxide solvent by uniformly dispersing them into that solvent. Then coating that silicon alkoxide solvent onto the surface of the glass base member 11. And finally baking the resulting base member 11 at a prescribed temperature.

Incidentally, the particle diameter of the pigment fine particles 2 within the organic solvent becomes at least 10 nm. Therefore, in order to form a uniform light absorption film 12, the thickness D1 of 10 nm or more becomes necessary.

Also, in case using organic pigment as the pigment, there may be also cases where the secondary diameter becomes 50 nm or more. Therefore, in order to form a more stable light absorption film 12, the thickness D1 of 100 nm or more is necessary.

On the other hand, making the thickness D1 of the light absorption film 12 1000 nm or more probably causes the production of crashes in its surface after the formation of it or the desiccation of it and therefore is not preferable.

If the thickness D1 of the light absorption film 12 is 800 nm or less, obtaining the long-term stability is confirmed irrespective of the structure of the anti-reflection multi-layer film thereon, forming method therefor, or preserving method therefor.

Also, in order to form a homogeneous light absorption film 12, having a sufficient bond strength to the glass base member 11, on this member 11, the weight percentage of the pigment fine particles based upon the silicon oxide, i.e. binder 1 preferably is low.

Concretely, the proportion of the pigment fine particles 2 based upon the silicon oxide in terms of the weight needs to be 3 wt% or less. When the weight proportion of the pigment fine particles 2 exceeds 3 wt%, the bond strength of the film to the glass base member 11 becomes insufficient. So, there are cases where the reliability for a long period of time becomes deteriorated.

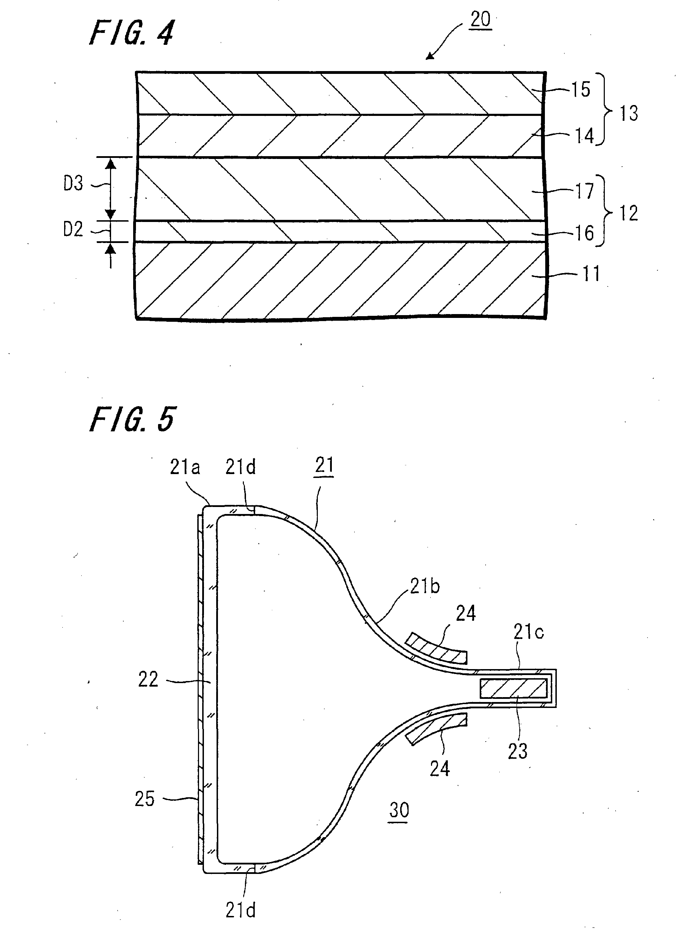

Additionally, in case wanting to use 3% or more of pigment fine particles 2 for adjusting the transmittance, it is also possible to form a light absorption film 12 of a two-layer structure (see FIG. 4) as later described. Thereby it is arranged not to contain the pigment fine particles in the first layer on the side of the glass base member 11.

Also, the refractive index of the light absorption film 12 is made to be from 1. 40 inclusive to 1. 65 inclusive that are approximate to that of the glass base member 11, or preferably from 1. 45 inclusive to 1. 55 inclusive. To this end, the light absorption film is made to contain high-refractive-index fine particles 3 such as tin oxide, titanium oxide, etc.

The solid content percentage of the high-refractive-index fine particles 3 based upon the silicon oxide, i.e. binder 1 is made to vary from 20 wt% inclusive to 40 wt% inclusive. That refractive index can thereby be easily adjusted.

And, if the refractive index of the light absorption film 12 is from 1. 40 inclusive to 1. 65 inclusive, optimizing the refractive index of the glass base member 11 enables avoiding the occurrence of the phenomenon that the image is doubly seen.

The glass of a high transmittance that is used in a recent flat glass panel has a refractive index of from 1. 45 inclusive to 1. 55 inclusive. Therefore, the refractive index of the light absorption film 12 in the case of applying the light absorption anti-reflection material member 10 of this embodiment to a flat glass panel, preferably, is from 1. 45 inclusive to 1. 55 inclusive.

The above-described fine particles 3 of high refractive index becomes nearly the same in particle diameter as the inorganic pigment in terms of its primary particle diameter. For this reason, even when containing the fine particles 3 of high refractive index, this will have no adverse effect upon an optimum thickness of the light absorption film 12.

In addition, the containing of the fine particles 3 of high refractive index does not deteriorate the anti-reflection function of the anti-reflection multi-layer film 13 immediately over the light absorption film 12.

As a method of forming the light absorption film 12 that is a coating film, a sol-gel method is adopted. In this sol-gel method, a spin-coat method is the most suitable for obtaining a uniform value of thickness.

Other than this spin-coat method, a roll-coat method, a dip-coat method, a spraying method, etc. can be used, too.

Provided, however, that the present invention is not limited to these methods of forming.

However, even in the case of using any one of such methods, the solid content percentage in which a preferable value of viscosity is obtained is from 1. 5 wt% to 4. 5 wt% inclusive, preferably from 2. 5 wt% to 3. 5 wt% inclusive in terms of the solid content percentage with respect to the organic solvent. Prepared is a silicon alkoxide solvent having dispersed therein silicon oxide so as to attain this solid content percentage.

In case the solid content percentage is less than 1. 5 wt%, the viscosity of the solution becomes low and is followed by the following disadvantages. Namely, even in case coating has been done to the already stated thickness (100 nm or more), the particles of the organic pigment are inconveniently exposed with the result that the hardness of the light absorption film 12 decreases.

When the solid content percentage is in excess of 4. 5 wt%, the viscosity becomes too much raised. Resultantly, in case having been coated over a wide area of the glass base member 11, the film thickness ceases to become uniform.

As a concrete example of forming the light absorption film 12, for example, the procedures therefor can be taken as follows.

The solid content percentage of silicon oxide, becoming the binder 1, in the solution is set to be 3. 0 wt%. As the pigment fine particles 2 there is used an organic pigment, which is mixed 3. 0 wt% in terms of the weight ratio based upon the silicon oxide. As the fine particles 3 of high refractive index there is used those of tin oxide, which is mixed 35. 0 wt% in terms of the weight ratio based upon the silicon oxide. Thereby, an alkoxide solvent is prepared.

And, this alkoxide solvent is coated on the glass base member 11 to a thickness of 200 nm by using a spin-coat method. The resulting coating is baked at a prescribed temperature, whereby the light absorption film 12 is formed.

On the light absorption film 12 there is formed a multi-layer structural anti-reflection film (the anti-reflection multi-layer film) 13. It is to be noted that in FIG. 1 the anti-reflection multi-layer film 13 has a simplest structure of having two layers.

At least one layer of the anti-reflection multi-layer film 13 is constructed of an electrically conductive thin film 14 the surface resistance of that is from 10 Ω per square inclusive to 1000 Ω per square inclusive.

As the material constituting this electrically conductive thin film 14 there is used transparent ITO (indium tin oxide), SnO₂ (tin oxide), or ZnOx (zinc oxide). Or as the anti-reflection multi-layer film 13 there is used a transition metal nitride film represented by a TiN (titanium nitride) film, a NbN (niobium nitride) film, etc. each of that has light absorption property. Further, there is used metal thin films such as Ag (silver) film, Ni-Fe (a nickel/iron alloy) film, etc.

In case providing as the anti-reflection multi-layer film 13 the one that has no electrical conductive layer, it is possible to form, for example, SiO₂ film 15.

As a method of forming this anti-reflection multi-layer film 13, there is adopted, for example, a DC active sputtering method.

In case forming the anti-reflection multi-layer film 13 comprised of, for example, the TiN film 14 and the SiO₂ film 15, the sputtering apparatus is made to have the following construction.

The sputtering apparatus is constructed of the following three chambers. A first one is a first film formation chamber in which a target of metal titanium is disposed; and a gaseous mixture of nitrogen and argon is used as the reaction gas. A second one is an isolation chamber that has a gas-replacing function. And a third one is a second film formation chamber in which there is disposed a target of metal silicon; and a gaseous mixture of oxygen and argon is used as the reaction gas.

Using the above-constructed sputtering apparatus, the TiN film 14 is formed within the first film formation chamber and the SiO₂ film 15 is formed on the TiN film 14 within the second film formation chamber.

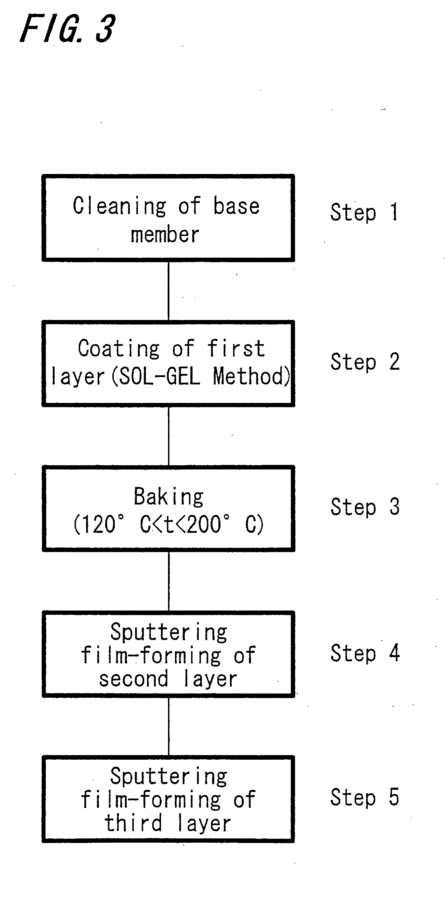

Here, a flow chart of a manufacturing process for manufacturing the light absorption/anti-reflection material member 10 of this embodiment is illustrated in FIG. 3.

First, the surface of the glass base member 11 is cleaned (step 1).

Subsequently, the light absorption film 12 is coated on the glass base member 11 by, for example, a roll-coating method (step 2).

Next, at a prescribed temperature t (120 °C < t < 200 °C), baking treatment is performed (step 3).

And, using a sputtering method, first, the second layer of TiN film 14 is formed (step 4), and then the third layer of SiO₂ film 15 is formed (step 5). As a result of the execution of these steps, there is formed the anti-reflection multi-layer film 13 of a two-layer structure.

According to the light absorption material member 10 of this embodiment, the light absorption film 12 contains therein the fine particles 3 of high refractive index. This comes to enable adjusting the refractive index of the light absorption film 12.

As a result of this, it is possible to adjust the refractive index of the light absorption film 12 so that it may become equal to that of, for example, the glass base member 11.

Also, the light absorption film 12 contains therein pigment. Thereby, it becomes possible to adjust the light transmission property of the light absorption film by selecting the pigment.

As a result of this, in case having used the light absorption/anti-reflection material body 10 as the anti-reflection film of the face panel of, for example, a display apparatus, it is possible to realize a selective absorption filter based on the consideration of the RGB brightness.

Also, because the anti-reflection multi-layer film 13 has the electrically conductive thin film 14, the unneeded radiation is prevented from being leaked.

And, according to the light absorption/antireflection material body 10 of this embodiment, it has a triple-layer film construction. Namely, a first layer is the light absorption film 12, a second layer is the TiN film (electrically conductive thin film) 14, and a third layer is the SiO₂ film 15. Therefore, it is possible to make the refractive index of any one of the layers range from 1. 45 inclusive to 1. 55 inclusive.

As a result of this, it is possible to suppress the reflection of light made in correspondence with the incidence made from the reverse side.

Next, a schematic sectional view of the light absorption/anti-reflection material body or member according to another embodiment of the present invention is illustrated in FIG. 4.

This light absorption/anti-reflection material member 20 has the light absorption film 12 the construction of that is of a two-layer structure. One layer is a first light absorption film 16 containing no pigment and the other layer is a second light absorption film 17 containing therein pigment. Namely, the first light absorption film 16 located on the side of the glass base member 11 contains the silicon oxide becoming the binder 1 and the fine particles 3 of high refractive index. On the other hand, the second absorption film 17 located thereon contains the silicon oxide becoming the binder 1, the pigment fine particles 2, and the fine particles 3 of high refractive index.

The other constructions are the same as those of the light absorption/anti-reflection material member 10 of FIG. 1, so a duplicated explanation thereof is omitted.

In the light absorption/anti-reflection material member 20 of this embodiment, the first light absorption film 16 on the glass base member 11 side contains no pigment therein. As a result of this, the bond strength between this first light absorption film 16 increases.

Incidentally, the thickness D2 of the first light absorption film 16 preferably is made to be 5 nm or more from the viewpoint, as well, of sufficiently ensuring the bond or adherence strength.

And, in case wanting to use the pigment fine particles 2 to an extent of 3% or more for the purpose of adjusting the transmittance, the pigment fine particles 2 are mixed as follows. Namely, the mixing is performed so that the weight ratio of them based upon the second light absorption film 12 containing them therein may become somewhat higher than in the FIG. 1 case of the first layer light absorption film 12, e.g. 5% or less.

The light absorption/anti-reflection material member 20 of FIG. 4 can be formed, for example, as follows.

First, the sol-gel solution for use for the first light absorption film 16 containing no pigment therein is coated on the glass base member 11.

Namely, the proportion of the silicon oxide becoming the binder 1 in the sol-gel solution, based upon it, in terms of the solid content percentage is set to be, for example, 3. 0 wt%. Then, as the fine particles 3 of high refractive index, tin oxide fine particles are mixed, for example, 35. 0 wt%, into that solution in terms of the weight ratio based upon the silicon oxide. Thereby prepared is an alkoxide solvent.

Subsequently, this alkoxide solvent is coated to the thickness D2 of, for example, 5 nm by using a spin-coating method.

Next, the sol-gel solution for use for the second light absorption film 17 containing pigment fine particles therein is coated.

Namely, the proportion of the silicon oxide becoming the binder 1 in the sol-gel solution, based upon it, in terms of the solid content percentage is set to be, for example, 3. 0 wt%. Then, as the fine particles 3 of high refractive index, tin oxide fine particles are mixed, for example, 35. 0 wt%, into that solution in terms of the weight ratio based upon the silicon oxide. Then, as the pigment fine particles 2, organic pigment is mixed, for example, 3. 5 wt%, into that solution in terms'of the weight ratio measured based upon the silicon oxide. Thereby prepared is an alkoxide solvent.

Subsequently, this alkoxide solvent is coated to the thickness D3 of, for example, 200 nm by using a spin-coating method.

The bond strength of the film member consisting of the thus-formed light absorption/anti-reflection material member 20 was the same despite the fact that the amount of pigment was greater than in the concrete example (3. 0 wt%) of the preceding embodiment.

And, by forming any one of the light absorption/antireflection material members 10, 20 of the above-described respective embodiments on the outer surface of the panel glass, it is possible to construct a display apparatus having the anti-reflection film formed on its panel glass.

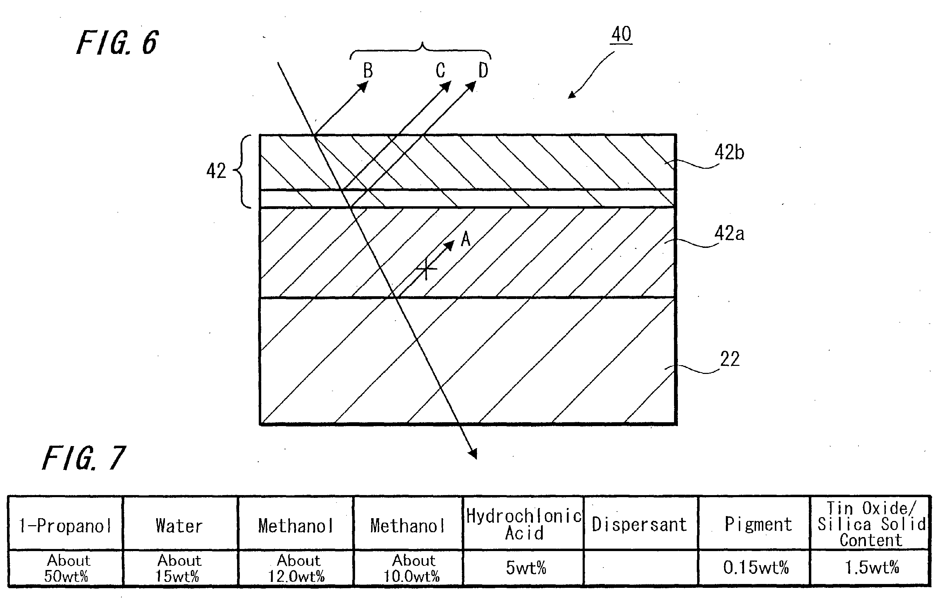

FIG. 5 is a schematic sectional view of a cathode ray tube, illustrating it as an embodiment of the display apparatus of the present invention.

This cathode ray tube 30 is formed of a glass-made cathode ray tube body 21 that has a panel portion 21a, a funnel portion 21b, and a neck portion 21c.

And, as the panel portion 21a of the cathode ray tube body 21, a panel glass 22 the outer surface of that has a flat configuration is joined to the glass of the funnel portion 21b by a seal portion 21d.

This panel glass 22 is made thicker at its peripheral portion (especially, the corner portions) that at its central portion in order to resist the outside air pressure.

Into the neck portion 21c of the cathode ray tube body 21 there is sealed an electron gun 23 that emits an electron beam. Also, in a zone from the neck portion 21c to the funnel portion 21b, there is attached a deflection yoke 24 for deflecting the electron beam emitted from the electron gun 23.

And, on the outer surface of the panel glass 22 there is formed an anti-reflection film 25 with an aim to sharpen the contrast.

As this anti-reflection film 25, there can be used either one of the light absorption/anti-reflection material member 10 or 20 of the above-described respective embodiments.

According to the cathode ray tube 30 of the above-described embodiment, it is the cathode ray tube 30 that uses the panel glass 22 that is made flat. In this cathode ray tube 30, as the anti-reflection film 25 for sharpening the contrast, there has been used the light absorption/anti-reflection material member 10 or 20 comprised of the light absorption film 12 and anti-reflection multi-layer film 13. As a result of this use, there occurs the light absorption action of the light absorption film 12. As a result of this, the thickness of the panel glass 22 due to the flattening of the panel glass 22 thereof can be prevented from producing its adverse effect.

Also, the optical interference of the anti-reflection multi-layer film 13 acts to prevent the occurrence of the reflection and this enables obtaining a high level of contrast that couldn't be attained in the prior art. Also, the provision of the electrically conductive thin film 14 in the anti-reflection multi-layer film 13 can prevent the unneeded radiation from being leaked.

Also, selectively determining the pigment of the light absorption film 12 of the light absorption/anti-reflection material member 10 or 20 enables obtaining a freer distribution of transmittance. As a result of this, it is possible to perform designing of the anti-reflection film 25 corresponding to one another's ratio among the three colors (red, green, and blue) brightness values of the cathode ray tube. Therefore, by optimizing the one another's ratio among the amounts of current corresponding to the three-color electron beams, it is possible to enhance the focusing performance.

### [Second Embodiment]

Subsequently, a schematic construction of the above-described light absorption/anti-reflection material member will be explained. As illustrated in FIG. 1, the light absorption/ anti-reflection material member 10 is formed on the outer surface of a panel glass 22 of the cathode ray tube. Namely, the light absorption/anti-reflection material member 10 is comprised of a light absorption film 11 disposed on the panel glass 22 and an anti-reflection multi-layer film 12 of a multi-layer structure that is disposed on the light absorption film 11.

Of those film elements, the light absorption film 11 consists of a light absorption desiccation gel film having a physical film thickness of, for example, 10 nm or more. As will be described later in detail, the light absorption film 11 contains a high-refractive-index fine powder that is colorless high-refractive-index material for adjustment of the optical refractive index of the film 11. Further, the light absorption film 11 also contains organic or inorganic pigment fine particles as coloring pigment components.

On the other hand, the anti-reflection multi-layer film 12 plays the role of attenuating the reflected light outgoing correspondingly to an incident light through the interference of light. Of the multi-layer structure thereof, at least one layer is formed of an electrically conductive film having a surface resistance of 1000 Ω per square or less. Concretely, taking up the simplest two-layer structure as an example, the anti-reflection multi-layer film 12 is constructed of the following two films. One is a TiN (titanium nitride) film 12a formed on the light absorption film 11 as an electrically conductive layer, which is the second layer, to a physical film thickness 12 nm. The other is a SiO₂ (silicon oxide) film 12b, the refractive index of that is 1. 52 or less (e.g. 1. 52), and that is formed on that film 12a as the outermost (the outermost surface) layer, which is the third layer, to a physical film thickness of 70 to 110 nm (e.g. 85 nm).

Incidentally, as the electrically conductive thin film, it is considered suitable to use in addition to the TiN film 12a for example the following. Transparent ITO (tin-doped indium oxide), SnO₂ (tin oxide), ZnOx (zinc oxide), or a transition metal nitride film such as NbN (niobium), or, further, a metal thin film such as an Ag (silver) film or Ni-Fe (nickel-iron alloy).

Also, the anti-reflection multi-layer film 12 may not be of a two-layer structure comprised of the above-described TiN film 12a and SiO₂ film 12b but may be of a three layer, or more, multi-layer structure such as that comprised of ITO SiO₂/TiO₂/ SiO₂. If made into such a multi-layer structure, it becomes possible to obtain a low-reflection property over a wider band.

Subsequently, a method of forming the above-described light absorption/anti-reflection material member 10 in case forming it on the outer surface of the panel glass 22 will be explained.

When forming the light absorption/anti-reflection material member 10, first, the light absorption film 11 is formed on the outer surface of the panel glass 22.

As raw material for forming the light absorption film 11 there is used a silica film of sol-gel solution. Namely, alcohol is added to silica alkoxide [Si(OC2H5)4] to thereby prepare a mixed solution. To this mixed solution there are added water necessary for hydrolysis and acids or alkali serving as catalyst, also necessary therefor. The resulting solution is used as starting material. And, into this solution there are blended as coloring components inorganic/organic pigment components such as carbon black or alkali blue lake. Further, there are blended as colorless high-refractive-index material for use for the adjustment of the optical refractive index tin oxide fine particles. Further, there is added in a small amount dispersant for dispersion of solid content in the solution. The resulting solution is used as a base coating material.

The alcohol that is added to the starting material needs only to be material by which metal alkoxide can be dissolved. Namely, it may be methanol, ethanol, n-propyl alcohol, n-butanol, octanol, diacetone alcohol, etc. As the catalyst working to accelerate the dydrolysis and to prevent the production of sediment and the separation of liquid phase there is used one, or a combination of two or more, selected from the group consisting of hydrochloric acid, sulfuric acid, nitric acid, acetic acid, and ammonia. As the coloring components there is selected colorant such as pigment correspondingly to the characteristic of the relevant cathode ray tube. In this case, as the particle diameter, it is difficult to exceed 500 nm from the viewpoint of the limitation upon the film thickness. The colorant the particle diameter of that is from 10 to 100 nm, therefore, is preferable. As the colorless high-refractive-index material dielectric material such as titanium oxide, zirconium oxide, aluminum oxide, silicon nitride, etc. can be also available in addition to tin oxide. But, as regards the particle diameter, ultra-fine particles ranging from 10 to 50 nm are regarded as preferable by taking the dispersibility into account. Provided, however, that the colorless high-refractive-index material is limited to the one bulk refractive index of that is 1. 6 or more as in the case of, for example, tin oxide fine particles. As the dispersant for use in the coating material solution, one or two or more kinds selected from the group consisting of anionic, cationic, or nonionic, surface active agent, epoxy, and polyvinylpyrrolidone need only to be used.

That is, the light absorption film 11 is formed as follows. Namely, by using as the starting material an alcohol solution of silica alkoxide having a -OH group (alcohol group) and a -OR group (alkoxyl group) each of that is a functional group. Then, by blending into that alcohol solution inorganic/ organic pigment components and colorless high-refractive-index material such as tin oxide fine particles. Further, by also adding a small amount of dispersant into that alcohol solution. Then, by using the resulting mass as the base coating material. Then, by coating that base coating material onto the outer surface of the panel glass 22 of the cathode ray tube. Then and finally, by burning the relevant mass at a prescribed temperature of t (e.g. t < 160 °C).

As a method of forming the light absorption film 11, which is a coating film of the base coating material, there is adopted, for example, a wet-coating method. In this wet-coating method, a spin-coating method is the most suitable for obtaining a uniform film thickness. In addition to the spin-coating method, a roll-coating method, bar-coating method, dip-coating method, spraying method, elestrusion method, etc. can also be used. However, the present invention is not limited to them.

After the formation of the light absorption film 11, subsequently thereto, the second layer of TiN film 12a is formed on the light absorption film 11. Further, the third layer of SiO₂ film 12b is formed. As a result of this, on the outer surface of the panel glass 22 there is formed the light absorption/anti-reflection material member 10, the member 10 having the anti-reflection multi-layer film 12 of a two-layer structure made up of the TiN film 12a and SiO₂ film 12b.

As the method of forming the anti-reflection multi-layer film 12 that is made from the second layer inclusive onward, there is adopted, for example, a DC active sputtering method. This DC active sputtering method is the best for obtaining a uniform distribution of film thickness over a large area. And adopting a simple film construction enables the increase in the manufacturing productivity.

Sputtering, in any method therefor, film formation is performed in an atmosphere the pressure of that has been controlled to 0. 1 to 1 Pa. Incidentally, other than sputtering, even the use of a wet-coating method based on the use of a sol-gel method also enables the formation of the anti-reflection multi-layer film 12. However, in order to obtain an electrically conductive layer (e.g. the TiN film 12a) the surface resistance of that is 1000 Ω per square or less, sputtering method is preferable. In addition, film formation by vacuum deposition is also possible to use. However, the present invention is not limited to these above-described film formation methods.

Meanwhile, the light absorption/anti-reflection material member 10 of this embodiment is formed on the outer surface of the panel glass 22 in accordance with the above-described manufacturing procedures. At this time, the blend percentage of the colorless high-refractive-index material in the base coating material, i.e. the content percentage of the colorless high-refractive-index material within the light absorption film 11 is adjusted. Said material 10 has a great feature in that by such adjustment it has been arranged to set the index of refraction of the light absorption film 11 as mentioned below.

Here, a detailed explanation will now be given of the relation between the content percentage of the colorless high-refractive-index material within the light absorption film 11 and the index of refraction of the light absorption film 11. FIG. 3 is an explanatory view illustrating one concrete example of the blend percentage of the base coating material that is adopted when forming the light absorption film. FIG. 4 and FIG. 5 each are an explanatory view illustrating an example of the property of the light absorption film after the formation thereof.

Assume that, for example, the main solvent components of the base coating material have been selectively determined as illustrated in FIG. 3 with the pigment and solvent percentages each being made fixed. Assume also that, under that assumption, using tin oxide fine particles as the colorless high-refractive-index material, the light absorption film 11 has been formed while making the conditions for the blend percentage of those fine particles variable. As the conditions for making variable the blend percentage of the tin oxide fine particles the following conditions cases are taken up as examples. Namely, cases where the weight percentage of tin oxide based upon silica solid content which is a dispersant of the solid content are 20% (the first condition), 30% (the second condition) and 60% (the third condition) respectively.

The base coating materials satisfying the above-described first to third conditions were prepared, and were each spin-coated on the panel glass 22 consisting of a glass substrate (5 mm thick) having a refractive index of 1. 52, to a film thickness of approximately 400 nm. The results of the reflectance and transmittance that were measured at that time are shown in FIGS. 4 and 5. It is seen from those results that, because if the blend percentage of tin oxide is made high the transmittance of the light absorption film 11 becomes low, the refractive index of it becomes high. On the other hand, it is seen that, conversely, because if the blend percentage of the tin oxide is made low the transmittance of the light absorption film 11 becomes high, the refractive index of it becomes low.

Also, namely, comparing the refractive index of the panel glass 22 with that of the light absorption film 11, the following can be said. Namely, when the blend percentage of the tin oxide becomes high whereby the transmittance of the light absorption film 11 decreases and as a result the difference in refractive index between those two elements increases, it is seen that the reflectance of the panel glass 22 and that of the light absorption film 11 relatively become high. This is because when the difference in refractive index between those two increases the reflection losses at these interfaces become high (see the arrow A in FIG. 1).

Accordingly, in the light absorption/anti-reflection material member 10 of this embodiment, the blend percentage of the tin oxide is determined to be 20%. By this determination, the refractive index of the panel glass 22 are made substantially equal. Thereby, the reflection loss at each of the interfaces between the panel glass 22 and the light absorption film 11 is made small. Saying concretely, the refractive index in terms of bulk of the tin oxide is to an extent of 1. 6 or so. Therefore it is set that the blend percentage of the tin oxide (the weight percentage of it based upon the silica solid content) be 20%. Resultantly, the refractive index of the light absorption film 11 becomes 1. 45 to 1. 55 or so, which is substantially the same as a value of 1. 52 the refractive index of the panel glass 22 has.

Namely, in the light absorption/anti-reflection material member 10 of this embodiment, as illustrated in FIG. 1, respective optical interference actions between each corresponding two of the following interface reflections occur. The anti-reflection conditions are thereby properly arranged to obtain a low-reflection property. That is, the interface reflections between the air layer and the outermost layer of SiO₂ film 12b (see the arrow B in the figure). The interface reflections between that SiO₂ 12b and the second layer of TiN film 12a (see the arrow C in the figure). And, further, the interface reflections between that TiN film 12a and the light absorption film 11 (see the arrow D in the figure). In the above-described case, the reflection loss at each of the interfaces between the light absorption film 11 and the panel glass 22 can be ignored through the above-described adjustment of the index of reflection. As a result of this, it becomes possible to perform individual, independent control of each of the transmittance and the reflectance

Controlling the transmittance is performed mainly through the adjustment of the film thickness of the light absorption film 11. In case only aiming to control the transmittance alone, the precision of the film thickness of the light absorption film 11 is to an extent of ±5 to 8% or so in terms of a permissible range of its values. The transmittance at this time can be made to range from -2% to +2%. When coating a coating material of a pigment-dispersed system, the coating method capable of providing a high precision of thickness generally includes a spin-coating method, a roll-coating method, etc. However, if able to realize a required film-thickness precision, the present invention is not limited to those coating methods.

On the other hand, controlling the reflectance is performed mainly through the adjustment of the thickness of the anti-reflection multi-layer film 12. The anti-reflection multi-layer film 12 based on the use of the optical interference needs to be strictly managed depending upon the refractive indexes and thicknesses of the piled up films. In order to properly determine the phase conditions on which light waves are superposed one upon the other, the adjustment of the phase needs to be made from the standpoint of the light wavelength. The relevant precision thereto needs to be approximately ±2% in terms of the film thickness. As a manufacturing process for forming a uniform film-thickness distribution over a large area such as that of the cathode ray tube with the above-described required precision, a sputtering method is suitable. Above all, a high-speed film-forming technique based on the use of a reactive magnetron method is suitable, by which a high quality of inexpensive production can be realized.

As described above, the light absorption/antireflection material member 10 of this embodiment is constructed of the following two films. One is the light absorption film 11 that has been formed on the panel glass 22. The other is the anti-reflection multi-layer film 12 that is formed on the light absorption film 11 as a multi-layer structure and at least one layer of that is the electrically conductive thin film (TiN film 12a). For this reason, if using this light absorption/antireflection material member 10 as the member for use on, for example, the flattened cathode ray tube, the following merits are brought about. Namely, it is possible to abate the influence of the panel thickness resulting from the flattening of the face-panel outer-surface configuration of the cathode ray tube. And, it is possible, while realizing this abatement, to impart excellent contrast performance to the cathode ray tube with a low level of reflection and a corresponding high level of light'absorption. Further, it is possible to let the cathode ray tube have electrical conductivity and hence the shield effect of shielding the leaked electromagnetic field. That is to say, it is possible to finally realize the surface-treated film possessing those merits. Namely, it is possible to realize the surface-treated film that suits the flat cathode ray tube based on the use of low-clear glass.

Also, in the light absorption/anti-reflection material member 10 of this embodiment, in the base coating material constituting the base of the light absorption film 11, there are blended not only the colorless high-refractive-index material such as tin oxide fine particles but also the organic or inorganic pigment fine particles. Therefore, for example, in case having used the member 10 as the anti-reflection film of the face panel of the cathode ray tube, it is possible to realize a selective-absorption filter based on the consideration of the RGB luminances. In other words, the degree of freedom for the selection of the pigment is high. Therefore, it is possible to change the color of the cathode ray tube screen body. Further, the degree of freedom for controlling the transmittance distribution of the cathode ray tube is high. Therefore, it is possible to suppress a red color of electron beam the luminous efficiency of that is low. Therefore, it becomes possible to enhance the focusing performance.

Incidentally, in this embodiment, an explanation has been given of a case where the present invention has been applied to the flat panel glass of the cathode ray tube. However, the present invention is not limited to the application to the cathode ray tube. For example, the present invention can also be similarly applied to a flat glass panel of the display apparatus such as, for example, an LCD (Liquid Crystal Display) or an FED (Field Emission Display) which is a self-luminous display as in the case of the cathode ray tube.

Having described preferred embodiments of the present invention with reference to the accompanying drawings, it is to be understood that the present invention is not limited to the above-mentioned embodiments and that various changes and modifications can be effected therein by one skilled in the art without departing from the spirit or scope of the present invention as defined in the appended claims.

## Claims

1. A light absorption/anti-reflection material 5 member comprising:
a light absorption film that is formed on a base member and that contains therein pigment fine particles and high-refractive-index fine particles; and
an anti-reflection multi-layer film that is formed on the light absorption film as a multi-layer structure and at least one layer of that has an electrically conductive thin film to thereby attenuate a reflected light corresponding to an incident light through the action of optical interference.

2. The light absorption/anti-reflection material member according to claim 1, wherein
the physical film thickness of the light absorption film ranges from 10 nm inclusive to 1000 nm inclusive.

3. The light absorption/anti-reflection material member according to claim 1 or 2, wherein
the light absorption film is the one that is formed by coating a sol-gel film in which from 1. 5 wt% inclusive to 4.5 wt% inclusive of silicon oxide is dispersed into an organic solvent in terms of solid content percentage.

4. The light absorption/anti-reflection material member according to claim 1, 2, or 3, wherein
the light absorption film contains therein the high-refractive-index in an amount corresponding to from 20 wt% inclusive to 40 wt% inclusive of silicon oxide as a main material, the light absorption film having a refractive index of from 1. 40 inclusive to 1. 65 inclusive.

5. The light absorption/anti-reflection material member according to claim 1, 2, 3 or 4, wherein
the light absorption film contains the pigment fine particles the proportion of that based upon the silicon 5 oxide is 5 wt% or less.

6. A light absorption/anti-reflection material member comprising:
a light absorption film of a two-layer structure one of that is a first layer containing therein only 10 high-refractive-index fine particles and silicon oxide alone and having a thickness of 5 nm or more and the other of that is a second layer consists of pigment fine particles, high-refractive-index fine particles, and silicon oxide; and
an anti-reflection multi-layer film that is formed on the light absorption film as a multi-layer structure and at least one layer of that consists of an electrically conductive film to thereby attenuate a reflected light corresponding to an incident light through the action of optical interference.

7. A light absorption/anti-reflection material member comprised of a light absorption film formed on a base member and an anti-reflection multi-layer film that is formed on the light absorption film as having a multi-layer structure and at least one layer of that consists of an electrically conductive thin film so as to attenuate, due to optical interference, a reflected light outgoing following the impingement of a relevant incident light, wherein the light absorption film contains high-refractive-index fine particles and the index of refraction thereof is made substantially the same as that of the base member by adjusting the content percentage of the high-refractive-index fine particles.

8. The light absorption/anti-reflection material member according to claim 7, wherein
the refractive index of the light absorption film ranges from 1. 45 to 1. 55 inclusive.

9. The light absorption/anti-reflection material member according to claim 7 or 8, wherein
the light absorption film is the one that has been formed on a basis of a base coating material, the base coating material being the one that has been obtained by blending high-refractive-index fine particles, the refractive index of that in terms of bulk is 1. 6 or more, with an alcohol solution of silicon alkoxide having -OH group and -OR group each of that is a functional group.

10. The light absorption/anti-reflection material member according to claim 9, wherein in case the high-refractive-index fine particles are tin oxide, the weight percentage of tin oxide based on silica solid content in the base coating material is made substantially 20%.

11. The light absorption/anti-reflection material member according to claim 9 or 10, wherein
organic or inorganic pigment fine particles are blended into the base coating material.

12. A display apparatus having formed on an outer surface of its panel an anti-reflection film, wherein
the anti-reflection film is comprised of:
a light absorption film formed on a base member and containing therein pigment fine particles and high-refractive-index fine particles; and
an anti-reflection multi-layer film that is formed on the light absorption film as a multi-layer structure and at least one layer of that consists of an electrically conductive film to thereby attenuate a reflected light corresponding to an incident light through the action of optical interference.

13. A display apparatus having formed on an outer surface of its panel an anti-reflection film, wherein
the anti-reflection film is comprised of:
a light absorption film of a two-layer structure one of that is a first layer containing therein only high-refractive-index fine particles and silicon oxide alone and the other of that is a second layer consisting of pigment fine particles, high-refractive-index fine particles, and silicon oxide; and
an anti-reflection multi-layer film that is formed on the light absorption film as a multi-layer structure and at least one layer of that consists of an electrically conductive film to thereby attenuate a reflected light corresponding to an incident light through the action of optical interference.
